(19) **Europäisches Patentamt / European Patent Office / Office européen des brevets**

(11) **EP 2 965 399 B1**

(12) **FASCICULE DE BREVET EUROPEEN**

(45) Date de publication et mention de la délivrance du brevet:
**11.09.2019 Bulletin 2019/37**

(21) Numéro de dépôt: **14713541.2**

(22) Date de dépôt: **06.03.2014**

(51) Int Cl.:
*H02J 7/00* *(2006.01)*    *H01M 10/44* *(2006.01)*
*H01M 10/052* *(2010.01)*

(86) Numéro de dépôt international:
**PCT/FR2014/050511**

(87) Numéro de publication internationale:
**WO 2014/135807 (12.09.2014 Gazette 2014/37)**

(54) **GESTION DE CHARGE D'UNE BATTERIE**

VERWALTUNG DER BATTERIELADUNG

MANAGEMENT OF BATTERY CHARGING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.03.2013 FR 1352033**

(43) Date de publication de la demande:
**13.01.2016 Bulletin 2016/02**

(73) Titulaire: **Renault S.A.S.**
**92100 Boulogne-Billancourt (FR)**

(72) Inventeurs:
- **SAINT-MARCOUX, Antoine**
  **91120 Palaiseau (FR)**
- **DELOBEL, Bruno**
  **92130 Issy-les-Moulineaux (FR)**
- **GIRAUD, Marc-Henri**
  **92130 Issy-les-Moulineaux (FR)**

(56) Documents cités:
**WO-A1-2011/152062    WO-A2-2006/135838**
**US-A1- 2009 273 320    US-A1- 2012 299 552**

## Description

L'invention concerne la gestion de la charge d'une batterie, en particulier une batterie lithium-ion (Li-ion). L'invention peut trouver un exemple d'application dans l'industrie automobile, notamment pour la gestion de charge d'une batterie de traction de véhicule électrique et/ou hybride.

Il est connu que les batteries, notamment de type au lithium (Li), sont généralement contrôlées par un système de contrôle de batterie (BMS - de l'anglais « Battery Management System ») qui est un système électronique de contrôle de l'état des différents éléments ou paramètres d'une batterie au lithium, et notamment de ses cellules constitutives comportant une électrode négative et une électrode positive.

Un système BMS est un élément important sur toutes les batteries au lithium ou les ensembles de batteries comprenant une batterie et un système BMS. Il surveille l'état de différents éléments ou paramètres de la batterie, tels que la tension totale ou des cellules individuelles, la température : température moyenne, température d'admission de liquide de refroidissement, température de sortie de liquide de refroidissement, ou températures des cellules individuelles et l'état de charge ou la profondeur de décharge. Un système BMS permet de calculer des données caractéristiques de la performance que peut fournir la batterie telles que la puissance de charge et la puissance de décharge maximales, et de sauvegarder des données caractéristiques de l'historique de la batterie telles que l'énergie fournie depuis la dernière charge ou le dernier cycle de charge, l'énergie totale utilisée depuis la première utilisation et le temps total de fonctionnement depuis la première utilisation.

Un système BMS assure la durabilité de la batterie en l'empêchant de fonctionner en dehors de sa plage nominale de fonctionnement. En parallèle de cela, elle assure la protection sécuritaire de la batterie en détectant des comportements anormaux des cellules du pack batterie, telle que la surintensité, la sur-tension (lors de la charge ou en phase de freinage récupératir), la sous-tension (lors de la décharge) ou encore la surchauffe et la sous-température.

En particulier, le système BMS permet de gérer la charge de la batterie en indiquant à chaque instant quel est le niveau maximal de puissance autorisée en charge et si la batterie est pleinement chargée ou non.

Un des paramètres prépondérants dans la détermination de ces deux paramètres est la tension de fin de charge ou tension de coupure. En effet, cette tension est représentative de la limite de charge des cellules constitutives de la batterie. C'est la valeur que doit atteindre la tension maximale des cellules de la batterie pour juger que la charge est bien terminée. Dans la technologie batterie Li-ion, la tension de coupure peut être comprise entre 2,5 V et 4,5 V, de préférence entre 3,5 V et 4,2 V. Hormis le choix de la tension de fin de charge, la définition d'une stratégie de charge revêt une importance capitale, car elle permet de rechercher un compromis entre durabilité et le temps de charge. Pour une même tension de fin de charge donnée, lorsqu'on limite fortement la puissance autorisée en charge, on améliore la durabilité au détriment du temps de charge, et lorsqu'on autorise une forte puissance en charge, on diminue le temps de charge, au détriment de la durabilité.

En fonction de l'état de vieillissement et de la température de la batterie, on peut moduler la puissance de charge, afin de gérer ce compromis.

En particulier, la stratégie de charge à puissance constante puis tension constante (CP-CV - de l'anglais « Constant Power, Constant Voltage ») est une stratégie qui permet d'optimiser le temps de charge. Dans un premier temps, une étape de charge de ladite batterie est mise en oeuvre à la puissance maximale fournie par le chargeur suivie d'une étape de limitation de la puissance maximale autorisée, dès lors que la tension maximale de la cellule atteint la tension de coupure, afin de réguler la tension maximale de la cellule par rapport à la tension de coupure.

Mais, cette stratégie peut poser en particulier à froid un problème sur la durabilité des batteries. La logique de régulation de la puissance maximale de chaque cellule de la batterie permet de ne pas dépasser la tension de coupure. Cependant, lorsque notamment l'anode de carbone est saturée de lithium, il n'y a plus de site disponible pour les ions lithium qui continuent d'alimenter l'électrode du fait de la charge forcée. Ces ions Li$^+$ se déposent alors à l'interface anode/électrolyte, sous forme métallique, constituant des dendrites de lithium qui peuvent conduire à un court-circuit interne. C'est le phénomène de dépôt du lithium ou « Lithium Plating » en anglais.

Ce problème de dépôt du lithium identifié et traité de manière alternative dans WO2011/152062 A1, est un problème associé à la charge et/ou au freinage récupératif. Le dépôt de lithium semble être lié au potentiel de l'électrode négative, qui n'est pas, par construction, directement mesurée par la tension de la cellule (la tension cellule n'étant que la différence entre les potentiels des électrodes positives et négatives).

Dans le cas d'une électrode négative en carbone graphite, dans la cellule en charge il y a donc deux réactions en concurrence au niveau de l'électrode négative :

- $C_6 + Li^+ + e^- \rightarrow LiC_6$, qui est la réaction souhaitée d'intercalation du lithium dans le carbone, et
- $Li^+ + e^- \rightarrow Li_{(m)}$, qui est la réaction non souhaitée de dépôt de Lithium métal.

Le dépôt de lithium s'explique par le fait que, dans certaines conditions de courant, de température, d'état de charge et de vieillissement, la réaction de dépôt de lithium est plus favorisée d'un point de vue cinétique que la réaction d'intercalation du lithium dans le carbone graphite. Cela se produit lorsque l'électrode négative passe en dessous du potentiel de dépôt de lithium pendant un temps suffisamment long, par exemple situé dans la plage de valeurs allant de 5 s à 20 min. Cela se produit plus facilement à froid.

WO 2011 122946 A2 vise à gérer un compromis entre le temps de charge et durabilité. En particulier, ce document enseigne le principe d'une modification de la logique de charge en fonction de la température.

Cependant, selon ce document, l'amélioration de la durabilité de la batterie provient d'une logique de charge qui, d'une part, favorise le réchauffage batterie en début de charge à froid par l'application de pulses de courant (de l'anglais « Pulse Width Modulation »), et, d'autre part, une diminution du niveau de courant en fin de charge. Cette solution revient donc à terminer la charge en tension constante, ce qui peut amener l'électrode négative sous le potentiel de dépôt de lithium pendant une durée importante indésirable. Or, les mécanismes de dépôt de lithium semblent non seulement liés à l'aspect niveau de potentiel de l'électrode négative, mais, également, à l'aspect durée pendant laquelle l'électrode négative tombe sous ce niveau de potentiel de dépôt de lithium.

Il existe un besoin pour un procédé qui permettrait de limiter le risque de court-circuit interne.

L'invention concerne un procédé de gestion de charge d'une batterie Lithium-ion, comprenant les étapes de :

a) réception d'une valeur mesurée de la température de la batterie ;
b) comparaison de la valeur mesurée reçue à l'étape a) avec une valeur de température seuil prédéterminée ;
c) génération d'un signal de commande de charge de ladite batterie, le signal de commande étant généré de sorte que, lorsque la valeur mesurée de température est inférieure ou égale à la valeur de température seuil, la puissance de charge, la tension de charge ou l'intensité de charge décroît par paliers, le passage d'un palier au suivant étant déclenché dès lors qu'une valeur déterminée de tension aux bornes de la batterie est atteinte, et d) de transmission du signal de commande vers un chargeur.

La mise en oeuvre du procédé peut permettre la commande d'un chargeur afin de réaliser une chute relativement importante de la puissance autorisée en charge, de la tension de charge ou de l'intensité de charge, de sorte que le potentiel de l'électrode négative ne passe plus que pendant une courte durée, par exemple située dans la plage de valeurs allant de 5 s à 20 min, en dessous du potentiel de dépôt de lithium. Le dépôt de lithium se fera d'autant plus facilement qu'il y a déjà du lithium déposé sous forme métallique sur l'électrode négative.

Ainsi, le signal de commande peut présenter avantageusement des variations « abruptes », par exemple des chutes de puissance comprises entre 1 et 20 kW, ou, dit autrement, des chutes rapides afin de faire osciller le potentiel de l'électrode négative pour éviter que cette valeur de potentiel devienne inférieure au potentiel de dépôt de lithium. Le signal de commande peut donc avoir une allure globalement décroissante avec des variations relativement abruptes, par exemple des discontinuités, des exponentielles décroissantes ou autres, ces variations abruptes permettant d'augmenter temporairement les valeurs du potentiel de l'électrode négative pour éviter que celles-ci soient inférieures au potentiel de dépôt de lithium pendant des durées importantes indésirables.

Par conséquent, non seulement le lithium métal n'a alors plus le temps de se produire en quantité critiques, indésirables, à l'électrode négative, mais, en outre, comme l'électrode négative repasse au dessus du niveau du potentiel de dépôt de lithium à intervalles réguliers, on peut même le dissoudre à nouveau sous forme d'ions Li$^+$ dans l'électrolyte.

Selon des modes de réalisation de l'invention, la valeur déterminée de tension peut avantageusement être une tension prédéterminée de fin de charge ou une tension déterminée par un autre paramètre.

Bien que le procédé décrit ci-dessus ne soit pas forcément optimal en terme de temps de charge, puisqu'il n'exploite pas la cellule au maximum de ses possibilités en faisant réguler par exemple la tension maximale cellule autour de la tension de coupure, contrairement à la charge CP-CV (ou CC-CV), ce procédé peut permettre d'éviter, comme indiqué précédemment, le dépôt de Li à l'électrode négative de la cellule ou de chaque cellule et le risque d'un court-circuit interne, ce qui peut être déterminant dans le domaine technique de l'invention.

Le procédé de l'invention peut très avantageusement être mis en oeuvre par un système de contrôle de batterie BMS, lequel décide de calculer la puissance autorisée en charge afin de sauvegarder la durabilité cellule, en limitant en particulier le dépôt de lithium à l'électrode négative de chaque cellule, lorsque la valeur de température de charge (T°C$_{charge}$), mesurée instantanément du début jusqu'à la fin de charge, est inférieure à la valeur de température seuil (étape c)).

Avantageusement, le procédé peut en outre comprendre une étape de réception d'une valeur mesurée de la tension de charge et une étape de comparaison de la valeur mesurée de la tension de charge reçue avec une valeur déterminée de tension seuil aux bornes de la batterie, dans lequel le signal de commande est généré par paliers décroissants lorsque la valeur mesurée de température est inférieure ou égale à la valeur de température seuil et lorsque la tension de charge est supérieure à une tension seuil.

Selon des formes de réalisation, la tension déterminée peut être la tension de coupure.

Pour une même température donnée, par exemple à 5°C, le système BMS peut appliquer une charge CP-CV, tant que la tension de coupure reste par exemple inférieure à une tension seuil de 4,10 V, et/ou peut appliquer une charge multi-étapes dès que par exemple la tension de coupure dépasse par exemple cette tension seuil de 4,10 V.

Ainsi, le procédé de l'invention peut être un procédé de charge dit « multi-étapes », qui peut avantageusement être mis en oeuvre lorsque la température de la batterie en cours de la charge est inférieure à la valeur de température seuil prédéterminée et, optionnellement, lorsque la tension de charge est élevée, la tension de charge pouvant avantageusement être la tension de coupure. Avantageusement, le procédé de charge dit « multi-étapes » peut être mis en oeuvre pour ces deux conditions réunies.

Selon des modes préférentiels de réalisation, les étapes a), b), c) et d) peuvent être régulièrement répétées au cours d'une même charge. Le procédé peut être implémenté via des boucles, avec une étape d'attente (τ) entre l'exécution de deux boucles successives. Ce temps d'attente peut par exemple être de 5 minutes à 1 heure. Ceci peut permettre de changer de stratégie de charge à intervalles, par exemple réguliers, selon que la température de la batterie passe au dessus ou en dessous de la température seuil prédéterminée.

De façon particulièrement avantageuse, les étapes a) et b) peuvent être effectuées une seule fois, en début de charge. Ainsi, la stratégie de charge est déterminée dès le début de charge. Dans ce cas, l'étape d'attente peut par exemple prendre des valeurs comprises entre 40 et 50 h.

Dans le cadre de l'invention, on entend par « signal » aussi bien par exemple un signal électrique, différentiel, analogique ou d'une autre nature, tel qu'un signal électromagnétique ou de pression.

Avantageusement, la température seuil (T°C$_{seuil}$) est généralement comprise entre -10°C et 30°C. Cette température peut être déterminée en fonction des caractéristiques électrochimiques de la cellule.

De préférence, lorsque T°C$_{charge}$ est inférieure ou égale à T°C$_{seuil}$, la différence peut être d'au moins un degré Celsius, de façon plus préférée, de quelques degrés. A titre d'exemple, T°C$_{charge}$ est inférieur à T°C$_{seuil}$ de 1 degré, de 2 degrés, voire 3 degrés celsius.

Selon un mode de réalisation de l'invention, lorsque la température de charge est inférieure ou égale à T°C$_{seuil}$, (étapes a) et b)), il est par exemple procédé à une charge de la batterie par un chargeur à un premier palier de puissance maximale déterminée, par exemple 40 kW. Dès que la tension maximale cellule $\left( V_{cell}^{max} \right)$ atteint la tension de coupure, on passe au palier de puissance de charge suivant, lequel est inférieur au palier précédent, par exemple 35 kW, et ainsi de suite, jusqu'à ce que la puissance de charge soit de 0 kW.

La puissance de charge peut, de préférence, lorsque la valeur mesurée de température est inférieure ou égale à la valeur de température seuil, décroître par paliers compris dans la plage de valeurs de 5 kW à 10 KW, voire dans la plage de valeurs de 5 kW à 20 KW selon les cas, pour des puissances de charge supérieures à un seuil de puissance déterminé, et par paliers compris dans la plage de valeurs de 1 à 1,5 kW, voire de 1 à 5 kW selon les cas, pour des puissances de charge inférieures à ce seuil de puissance déterminé. Le seuil de puissance déterminé est de préférence compris entre 10 kW et 15 kW environ.

De préférence, le seuil de puissance de charge peut être prédéterminé avant la mise en oeuvre du procédé ou, selon des formes de réalisation, déterminé au cours de l'exécution du procédé.

Lorsque la valeur mesurée de température est inférieure ou égale à la valeur de température seuil, un palier ou chaque palier de puissance peut être maintenu pendant une durée comprises de préférence entre 10 s et 25 min, en particulier entre 10 s et 20 min.

Le premier palier peut quant à lui être spécifiquement mis en oeuvre pendant des durées supérieures à celles des autres paliers subséquents, typiquement de l'ordre de 15 s à 25 min.

La puissance maximale de charge de chaque cellule ou d'une façon générale de la batterie Li-ion peut dépendre de la batterie Li-ion utilisée, et peut être habituellement d'au plus 50 kW.

Dans le cadre de l'invention, la batterie Li-ion n'est nullement limitée, et peut de préférence être une batterie où le lithium reste à l'état ionique grâce à l'utilisation d'un composé d'insertion aussi bien à l'électrode négative, généralement en graphite, qu'à l'électrode positive, pouvant être en oxyde de cobalt, oxyde de manganèse ou en phosphate de fer. Parmi les batteries Li-ion, on peut citer les batteries dites « lithium métal-polymère » et « lithium-air ». Les batteries Li-ion de l'invention peuvent être applicables dans divers domaines technologique, tels que automobiles, ordinateurs ou télécoms, et peuvent être adaptés pour les systèmes embarquées ou débarqués.

Le procédé de l'invention peut être mis en oeuvre par tout type de chargeurs connus de l'homme du métier, notamment disponibles dans le commerce, et les chargeurs ne sont nullement limités.

Selon des modes de réalisation, le procédé peut en outre inclure une étape de détermination de la valeur de T°C$_{seuil}$, en fonction de l'état de vieillissement de la batterie. Par exemple, on peut sélectionner cette valeur parmi une pluralité de valeurs de températures seuils prédéterminées, en fonction de l'état de vieillissement de la batterie.

On estime habituellement que ce vieillissement peut correspondre à une perte de 10-20% de la capacité totale de la batterie (exprimée en A.h). Dans ce cas, plus le vieillissement de la batterie est significatif, plus cette valeur de T°C$_{seuil}$ peut être élevée, pour les mêmes raisons que celles précisées plus haut.

Selon des formes de réalisation, lorsque la température de la batterie en cours de charge est notamment supérieure à la valeur de température seuil, le signal de commande de charge est élaboré de façon à commander une phase de charge rapide à tension croissante rapide puis une phase d'absorption à courant décroissant régulé à une valeur de tension prédéterminée, par exemple une tension de coupure.

De façon avantageuse, le procédé peut comprendre en outre une étape de réchauffage de la batterie Li-ion, notamment tout au long de la charge.

Une telle étape de réchauffage de la batterie peut permettre d'adapter et/ou modifier la charge, par exemple à intervalles réguliers, en fonction de l'évolution au cours du temps de charge de la température de la batterie.

Par exemple, lorsque par exemple la charge débute à une température en dessous de $T°C_{seuil}$, et lorsque la tension de coupure est supérieure à une tension seuil, alors la charge de la batterie est une charge multi-étapes. Lorsqu'au cours de la charge la température de la batterie dépasse $T°C_{seuil}$, notamment par effet Joule, alors le système BMS peut mettre en oeuvre une charge de la batterie selon une charge CP-CV ou CC-CV, quelle soit la valeur de la tension de coupure. En variante, il est possible d'appliquer cette stratégie de sélection de charge sur une batterie disposant d'un dispositif de réchauffage de ladite batterie. Il peut alors être possible de simultanément réchauffer et charger la batterie, selon la stratégie ci-dessus.

Pour optimiser la durabilité d'une batterie, le système BMS peut moduler la tension de coupure en fonction de l'état de vieillissement de la batterie.

Or, s'il peut être acceptable d'appliquer une charge de type CP-CV avec une tension de coupure faible, typiquement de l'ordre de 4,05 V, en début de vie de la batterie, une charge CP-CV avec une tension de coupure élevée, par exemple de 4,2 V, imposée par le système BMS, en fin de vie de la batterie, risque de dégrader la batterie du fait du dépôt de lithium.

Ainsi, la charge multi-étapes peut être avantageusement mise en oeuvre si la tension de coupure est élevée et si la température de la batterie en cours de la charge est inférieure à la valeur de température seuil prédéterminée.

L'invention concerne également un dispositif de gestion de charge d'une batterie Lithium-ion, comprenant:

des moyens de réception d'une valeur mesurée de la température de la batterie, issue d'un capteur de température ;
des moyens de traitement agencés pour comparer la valeur mesurée avec une valeur de température seuil prédéterminée, et pour générer un signal de commande de charge de ladite batterie, dans lequel les moyens de traitement sont agencés pour que, lorsque la valeur mesurée de température est inférieure ou égale à la valeur de température seuil, le signal de commande soit généré de sorte que la puissance de charge, la tension de charge ou l'intensité de charge décroît par paliers, le passage d'un palier au suivant étant déclenché dès lors qu'une valeur déterminée de tension aux bornes de la batterie est atteinte, et

des moyens de transmission pour transmettre le signal de commande vers un chargeur.

Selon des modes de réalisation de l'invention, la valeur déterminée de tension peut avantageusement être une tension de fin de charge prédéterminée ou une tension déterminée par un autre paramètre.

Le dispositif peut en outre inclure des moyens de calcul de la puissance autorisée en charge afin de minimiser le temps de charge, lorsque la température de début de charge est supérieure à la température seuil.

Un tel dispositif est en particulier adapté à la mise en oeuvre du procédé ci-dessus avec les différentes variantes.

Les moyens de réception peuvent comprendre par exemple, une broche d'entrée, un port d'entrée et ou autre.

Les moyens de traitement peuvent comprendre un coeur de processeur ou CPU (de l'anglais « Central Processing Unit »), un processeur ou autre.

Les moyens de transmission peuvent par exemple comprendre une broche de sortie, un port de sortie ou autre. Un tel dispositif de gestion peut très avantageusement être un système BMS, lequel fait de préférence partie intégrante de la batterie Li-ion.

L'invention concerne, selon un autre aspect, un programme d'ordinateur comprenant des instructions pour effectuer les étapes du procédé de l'invention, lorsque ces instructions sont exécutées par un processeur.

Avantageusement, ce programme d'ordinateur peut être stocké dans une mémoire du dispositif de gestion de gestion de charge.

L'invention concerne également un ensemble de batterie Lithium-ion comportant une batterie Lithium-ion et un dispositif de gestion de charge de la batterie, tel que décrit plus haut.

L'invention concerne également un véhicule automobile incorporant une batterie Lithium-ion et le dispositif de gestion de charge décrit ci-dessus et/ou un ensemble de batterie, tel que décrit ci-dessus. L'invention est illustrée par les figures et les exemples non limitatifs qui suivent.

L'invention est maintenant décrite plus en détail en référence aux figures non limitatives, dans lesquelles,

- la Figure 1 est un exemple de graphique représentant l'évolution du potentiel de l'électrode positive et du potentiel de l'électrode négative, en fonction de la durée de charge, selon l'art antérieur ;

- la Figure 2 est un organigramme d'un exemple de procédé selon un mode de réalisation de l'invention.

- la Figure 3 est un graphique de stratégie de charge d'une batterie Li-ion selon un exemple de l'invention, lorsque la température de charge est inférieure ou égale à une température seuil prédéterminée, et

- la Figure 4 est un exemple de véhicule automobile comprenant un ensemble de batterie de traction, selon un mode de réalisation.

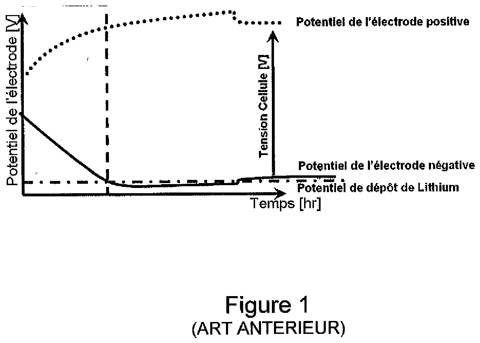

Selon la stratégie de charge de la Figure 1, il se produit un dépôt de lithium à l'électrode négative. Ce qui provoque le dépôt de lithium, c'est le fait que la réaction de dépôt de lithium soit davantage favorisée d'un point de vue cinétique que la réaction d'intercalation du lithium dans le carbone graphite. Cela se produit lorsque l'électrode négative passe en dessous du potentiel de dépôt de lithium pendant un temps, ici de 20 min, au cours de la charge de la batterie.

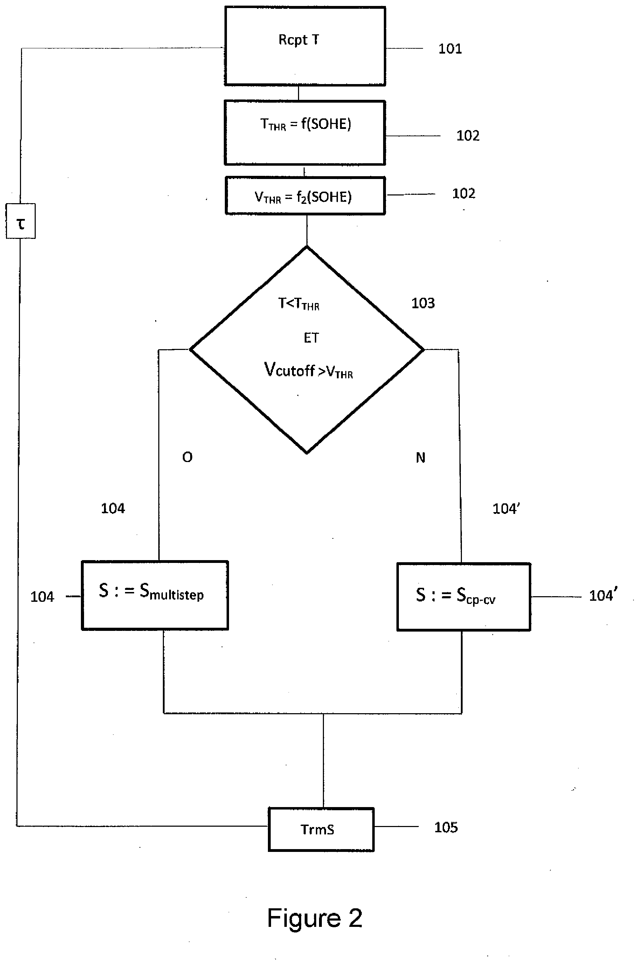

Selon la figure 2, la première étape du procédé (étape a)) est la réception 101 d'une valeur de température T d'une batterie Lithium-ion en début de charge, mise en oeuvre par un système BMS.

Au cours d'une étape 102, on détermine une valeur de température seuil ($T_{THR}$) ici estimée en fonction du vieillissement de la batterie (f(SOHE)) 102. Par exemple, $T_{THR}$ peut être égale à 15°C.

La tension seuil est également ici estimée en fonction de l'état de vieillissement de la batterie ($f_2$(SO-HE)) 102'.

La deuxième étape (étape b)) 103 est, d'une part, la comparaison de cette valeur de température mesurée (T), selon 101, avec la température seuil ($T_{THR}$) et la comparaison de la tension de coupure ($V_{cut-off}$) avec la tension seuil ($V_{THR}$).

Lorsque cette température mesurée (T) est inférieure à $T_{THR}$, et lorsque $V_{cut-off}$ est supérieure à $V_{THR}$, alors le système BMS génère un signal de commande de charge de la batterie selon la voie multi-étapes de l'invention (étape 104).

En revanche, si l'une et/ou l'autre de ces conditions n'est pas respectée, le système BMS génère, au cours d'une étape 104', un signal de commande 104' de charge CP-CV (S := $S_{CP-CV}$).

Le signal de commande S est ensuite transmis vers un chargeur de la batterie Lithium-ion au cours d'une étape 105. La stratégie de charge est donc fonction des paramètres ci-dessus.

Le procédé comporte également une étape d'attente (τ) entre l'exécution de deux boucles, c'est-à-dire de la mise en oeuvre des étape 101, 102, 102', 103, 104, 104' et 105.

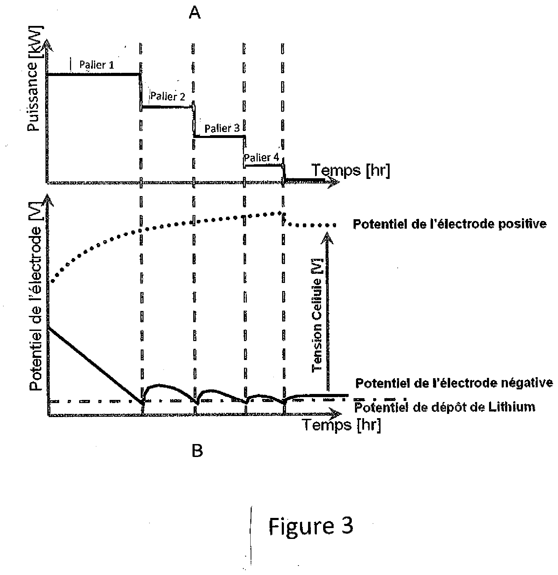

Les Figure 3 A et B correspondent à une stratégie de charge d'une batterie Li-ion selon un exemple de l'invention, lorsque la température de charge est inférieure ou égale à la température seuil ici fixée à 15°C.

Plus précisément, la Figure 3A représente un exemple de graphique de charge par paliers décroissants de puissance, débutant à 50 kW pendant 20 min, le deuxième palier étant fixé à 32 k W pendant 10 min, le troisième palier étant fixé à 6 kW pendant 7 min, le quatrième palier étant fixé à 2 kW pendant 8 min, jusqu'à atteindre une puissance de charge nulle.

La figure 3B représente un exemple d'évolution du potentiel de l'électrode négative de la batterie Li-ion en fonction du temps de charge, lors de l'application de la stratégie de charge correspondant à la Figure 3A.

Selon un exemple de l'invention, le potentiel de l'électrode se trouve inférieur à celui du dépôt de lithium que pendant un relativement bref instant, ici de 10 s, à chaque palier de décroissance de la puissance, ce qui, d'une part, peut éviter le dépôt de lithium métal en quantité critiques, et, d'autre part, peut augmenter ainsi la durabilité de la batterie tout en optimisant le temps de charge sans dégradation de la batterie notamment par des sur-tensions.

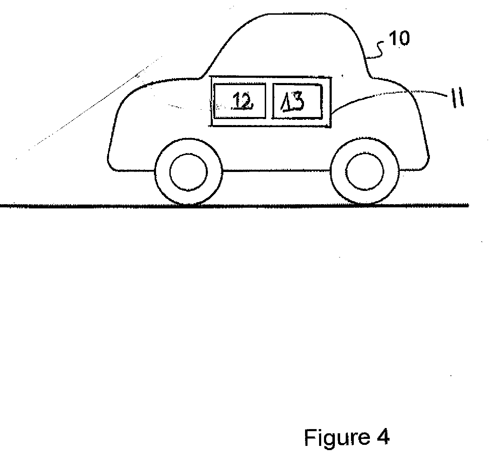

En référence à la figure 4, un exemple de véhicule automobile 10 comprend un ensemble de batterie de traction 11, lequel peut être chargé au moyen d'un chargeur (non représenté), par exemple une borne de charge raccordée au réseau électrique.

La batterie 12 peut par exemple être une batterie lithium ion.

Le chargeur peut par exemple être une borne de charge rapide fournissant un courant continu à l'ensemble de batterie 11 du véhicule 10.

L'ensemble de batterie 11 peut intégrer un dispositif de gestion de la charge 13, par exemple un système de contrôle de batterie de type BMS, lequel système comporte un processeur (non représenté) exécutant un programme comprenant des instructions pour adapter et/ou modifier la stratégie de charge à intervalles réguliers, en fonction de l'évolution au cours du temps de charge de la température de la batterie et de la tension de coupure. Un exemple de stratégie de charge est donné à la Figure 3.

Le dispositif de gestion de la charge 13 comporte des moyens de réception d'une valeur de température de la batterie et de la tension de coupure (non représentés), par exemple une broche d'entrée en communication électrique avec des capteurs (non représentés) du véhicule automobile 10.

Le dispositif 13 comporte des moyens de traitement (non représentés), agencés pour comparer, d'une part, la valeur de température mesurée avec une valeur de température seuil et, d'autre part, de la tension de coupure avec une tension seuil, lesquels sont un coeur d'un processeur, et des moyens de transmission du signal (non représentés) vers un chargeur, lesquels sont une broche de sortie.

## Revendications

1. Procédé de gestion de charge d'une batterie Lithium-ion, comprenant les étapes de :

   a) réception (101) d'une valeur mesurée de la température de la batterie ;

b) comparaison (103) de la valeur mesurée reçue à l'étape a) avec une valeur de température seuil prédéterminée ;

c) de génération (104,104') d'un signal de commande de charge de ladite batterie, le signal de commande étant généré de sorte que, lorsque la valeur mesurée de température est inférieure ou égale à la valeur de température seuil, la puissance de charge, la tension de charge ou l'intensité de charge décroît par paliers, le passage d'un palier au suivant étant déclenché dès lors qu'une valeur déterminée de tension aux bornes de la batterie est atteinte, et

d) de transmission (105) du signal de commande vers un chargeur.

2. Procédé selon la revendication 1, dans lequel, lorsque la valeur mesurée de température est inférieure ou égale à la valeur de température seuil, la puissance de charge décroît par paliers compris dans la plage de valeurs de 5 kW à 10 KW pour des puissances de charge supérieures à un seuil de puissance déterminé, et par paliers compris dans la plage de valeurs de 1 kW à 1,5 kW pour des puissances de charge inférieures à ce seuil de puissance déterminé.

3. Procédé selon la revendication 1 ou 2, dans lequel, la valeur mesurée de température est inférieure ou égale à la valeur de température seuil, un palier de puissance est maintenu pendant une durée comprise entre 10 s et 25 min.

4. Procédé selon l'une des revendications 1 à 3, dans lequel les étapes a), b), c) et d), sont régulièrement répétées au cours d'une même charge.

5. Procédé selon l'une des revendications 1 à 3, dans lequel les étapes a) et b) sont effectuées une seule fois, en début de charge.

6. Procédé selon l'une des revendications 1 à 5, comprenant en outre une étape de détermination de la valeur de température seuil, en fonction de l'état de vieillissement de la batterie (102).

7. Procédé selon l'une des revendications 1 à 6, dans lequel lorsque la température de la batterie en cours de charge est supérieure à la valeur de température seuil, le signal de commande de charge est généré de façon à commander une phase de charge rapide à tension croissante rapide puis une phase d'absorption à courant décroissant régulé à une valeur de tension prédéterminée, par exemple une tension de coupure.

8. Procédé selon l'une des revendications 1 à 7, comprenant en outre une étape de réception d'une valeur mesurée de la tension de charge et une étape de comparaison de la valeur mesurée de la tension de charge reçue avec une valeur déterminée de tension seuil aux bornes de la batterie, dans lequel le signal de commande est généré par paliers décroissants lorsque la valeur mesurée de température est inférieure ou égale à la valeur de température seuil ou lorsque la tension de charge est supérieure à une valeur de tension seuil.

9. Programme d'ordinateur comprenant des instructions pour effectuer les étapes du procédé selon l'une des revendications 1 à 8, lorsque ces instructions sont exécutées par un processeur.

10. Dispositif de gestion de charge d'une batterie Lithium-ion (13), comprenant :

- des moyens de réception d'une valeur mesurée de la température de la batterie, issue d'un capteur de température ;
- des moyens de traitement agencés pour comparer la valeur mesurée avec une valeur de température seuil prédéterminée, et pour générer un signal de commande de charge de ladite batterie, dans lequel les moyens de traitement sont agencés pour que, lorsque la valeur mesurée de température est inférieure ou égale à la valeur de température seuil, le signal de commande soit généré de sorte que la puissance de charge, la tension de charge ou l'intensité de charge décroît par paliers, le passage d'un palier au suivant étant déclenché dès lors qu'une valeur déterminée de tension aux bornes de la batterie est atteinte, et
- des moyens de transmission pour transmettre le signal de commande vers un chargeur.

11. Véhicule automobile incorporant une batterie Lithium-ion (12) et un dispositif de charge (13) selon la revendication 10.

**Patentansprüche**

1. Verfahren zur Verwaltung einer Ladung einer Lithium-Ionen-Batterie, umfassend die folgenden Schritte:

a) Empfang (101) eines Messwerts der Temperatur der Batterie;

b) Vergleich (103) des in Schritt a) empfangenen Messwerts mit einem vorbestimmten Grenztemperaturwert;

c) Erzeugung (104, 104') eines Ladesteuersignals der Batterie, wobei das Steuersignal derart erzeugt wird, dass, wenn der Temperaturmesswert kleiner oder gleich dem Grenztemperaturwert ist, die Ladeleistung, die Ladespannung oder die Ladestärke stufenweise abnimmt, wobei der Übergang von einer Stufe zur nächsten ausgelöst wird, sobald ein bestimmter Spannungswert an den Klemmen der Batterie erreicht ist, und

d) Übertragung (105) des Steuersignals zu einem Ladegerät.

2. Verfahren nach Anspruch 1, bei dem, wenn der Temperaturmesswert kleiner oder gleich dem Grenztemperaturwert ist, die Ladeleistung stufenweise in dem Wertebereich von 5 kW bis 10 kW für Ladeleistungen über einer bestimmten Leistungsgrenze und stufenweise in dem Wertebereich von 1 kW bis 1,5 kW für Ladeleistungen unter dieser bestimmten Leistungsgrenze abnimmt.

3. Verfahren nach Anspruch 1 oder 2, bei dem der Temperaturmesswert kleiner oder gleich dem Grenztemperaturwert ist, eine Leistungsstufe während einer Dauer zwischen 10s und 25min aufrechterhalten wird.

4. Verfahren nach einem der Ansprüche 1 bis 3, bei dem die Schritte a), b), c) und d) während einer selben Ladung regelmäßig wiederholt werden.

5. Verfahren nach einem der Ansprüche 1 bis 3, bei dem die Schritte a) und b) einmal am Ladebeginn ausgeführt werden.

6. Verfahren nach einem der Ansprüche 1 bis 5, ferner umfassend einen Schritt der Bestimmung des Grenztemperaturwerts in Abhängigkeit vom Alterungszustand der Batterie (102).

7. Verfahren nach einem der Ansprüche 1 bis 6, bei dem, wenn die Temperatur der Batterie während des Ladens höher als der Grenztemperaturwert ist, das Ladesteuersignal erzeugt wird, um eine rasche Ladephase mit rasch steigender Spannung, dann eine Absorptionsphase mit abnehmendem Strom, der auf einen vorbestimmten Spannungswert, beispielsweise eine Abschaltspannung, eingestellt ist, zu steuern.

8. Verfahren nach einem der Ansprüche 1 bis 7, ferner umfassend einen Schritt des Empfangs eines Messwerts der Ladespannung und einen Schritt des Vergleichs des Messwerts der empfangenen Ladespannung mit einem bestimmten Grenzspannungswert an den Klemmen der Batterie, bei dem das Steuersignal in abnehmenden Stufen erzeugt wird, wenn der Temperaturmesswert kleiner oder gleich dem Grenztemperaturwert ist, oder wenn die Ladespannung höher als ein Grenzspannungswert ist.

9. Computerprogramm, umfassend Anweisungen, um die Schritte des Verfahrens nach einem der Ansprüche 1 bis 8 auszuführen, wenn diese Anweisungen von einem Prozessor ausgeführt werden.

10. Vorrichtung zur Verwaltung einer Ladung einer Lithium-Ionen-Batterie (13), umfassend:

- Mittel zum Empfang eines Messwerts der Temperatur der Batterie, die von einem Temperaturfühler kommt;
- Bearbeitungsmittel, die dazu vorgesehen sind, den Messwert mit einem vorbestimmten Grenztemperaturwert zu vergleichen, und ein Ladesteuersignal der Batterie zu erzeugen, wobei die Bearbeitungsmittel derart vorgesehen sind, dass, wenn der Temperaturmesswert kleiner oder gleich dem Grenztemperaturwert ist, das Steuersignal derart erzeugt wird, dass die Ladeleistung, die Ladespannung oder die Ladestärke stufenweise abnimmt, wobei der Übergang von einer Stufe zur nächsten ausgelöst wird, sobald ein bestimmter Spannungswert an den Klemmen der Batterie erreicht ist, und
- Mittel zur Übertragung des Steuersignals zu einem Ladegerät.

11. Kraftfahrzeug, umfassend eine Lithium-Ionen-Batterie (12) und eine Ladevorrichtung (13) nach Anspruch 10.

**Claims**

1. Method for managing the charging of a lithium-ion battery, comprising the steps of:

a) receiving (101) a measured value of the battery temperature;
b) comparing (103) the measured value received in the step a) with a predetermined threshold temperature value;
c) generating (104, 104') a charging control signal for said battery, the control signal being generated such that, when the measured temperature value is less than or equal to the threshold temperature value, the charging power, the charging voltage or the charging current decreases in steps, the transition from one level to the next being initiated when a determined voltage value at the terminals of the battery is reached, and
d) transmitting (105) the control signal to a charger.

2. Method according to Claim 1, in which, when the measured temperature value is less than or equal to the threshold temperature value, the charging power decreases in steps to levels lying within the range of values from 5 kW to 10 kW for charging powers greater than a determined power threshold, and in steps to levels lying within the range of values from 1 kW to 1.5 kW for charging powers less than this determined power threshold.

**3.** Method according to Claim 1 or 2, in which, the measured temperature value is less than or equal to the threshold temperature value, a power level is maintained for a duration of between 10 s and 25 min.

**4.** Method according to one of Claims 1 to 3, in which the steps a), b), c) and d) are regularly repeated during a same charge.

**5.** Method according to one of Claims 1 to 3, in which the steps a) and b) are performed just once, at the start of charging.

**6.** Method according to one of Claims 1 to 5, further comprising a step of determining the threshold temperature value, as a function of the state of aging of the battery (102).

**7.** Method according to one of Claims 1 to 6, in which, when the temperature of the battery currently being charged is greater than the threshold temperature value, the charging control signal is generated so as to order a fast charging phase with rapidly increasing voltage followed by a phase of absorption with decreasing current regulated to a predetermined voltage value, for example a cutoff voltage.

**8.** Method according to one of Claims 1 to 7, further comprising a step of reception of a measured value of the charging voltage and a step of comparison of the measured charging voltage value received with a determined threshold voltage value at the terminals of the battery, in which the control signal is generated in decreasing steps when the measured temperature value is less than or equal to the threshold temperature value or when the charging voltage is greater than a threshold voltage value.

**9.** Computer program comprising instructions for performing the steps of the method according to one of Claims 1 to 8, when these instructions are executed by a processor.

**10.** Device for managing the charging of a lithium-ion battery (13), comprising:

- means for receiving a measured value of the battery temperature, from a temperature sensor;
- processing means arranged to compare the measured value with a predetermined threshold temperature value, and to generate a charge control signal for said battery, in which the processing means are arranged so that, when the measured temperature value is less than or equal to the threshold temperature value, the control signal is generated in such a way that the charging power, the charging voltage or the charging current decreases in steps, the transition from one level to the next being initiated when a determined voltage value at the terminals of the battery is reached; and
- transmission means for transmitting the control signal to a charger.

**11.** Motor vehicle incorporating a lithium-ion battery (12) and a charging device (13) according to Claim 10.

**Figure 1**
(ART ANTERIEUR)

Figure 2

A

Figure 3

Figure 4

**RÉFÉRENCES CITÉES DANS LA DESCRIPTION**

**Documents brevets cités dans la description**

- WO 2011152062 A1
- WO 2011122946 A2